(19) Europäisches Patentamt
European Patent Office
Office européen des brevets

(11) **EP 3 355 244 A1**

(12) **EUROPEAN PATENT APPLICATION**

(43) Date of publication:
01.08.2018 Bulletin 2018/31

(51) Int Cl.:
***G06K 9/62*** *(2006.01)*

(21) Application number: 18152796.1

(22) Date of filing: 22.01.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: 26.01.2017 US 201715416543

(71) Applicant: AGT International GmbH
8050 Zurich (CH)

(72) Inventors:
• SUKHANOV, Sergey
64293 Darmstadt (DE)
• MERENTITIS, Andreas
10115 Berlin (DE)
• DEBES, Christian
64367 Muhltal (DE)

(74) Representative: Taor, Simon Edward William et al
Venner Shipley LLP
200 Aldersgate
London EC1A 4HD (GB)

(54) **DATA FUSION AND CLASSIFICATION WITH IMBALANCED DATASETS**

(57) Method and system for classification in imbalanced datasets within a supervised classification framework. Bootstrap methodology is modified according to sampling weights and adaptive target set size principle, to induce weak classifiers from the bootstrap samples in an iterative procedure that results in a set of weak classifiers. A weighted combination scheme is used to adaptively combine the weak classifiers to a strong classifier that achieves good performance for all classes (reflected as high values for metrics such as G-mean and F-score) as well as good overall accuracy.

FIG. 2

EP 3 355 244 A1

**Description**

**BACKGROUND**

Classification and data fusion tasks are usually formulated as supervised data processing problems, where, given training data of a dataset supplied to a processing engine, the goal is for the processing engine to learn an algorithm for classifying new data of the dataset. Training data involves samples belonging to different classes, where the samples of one class are often heavily underrepresented compared to the other classes. That is, dataset classes are often imbalanced. Class imbalance usually impacts the accuracy and relevance of training, which in turn degrades the performance of classification and data fusion algorithms that results from the training.

Training data typically includes representative data annotated with respect to the class to which the data belongs. For example, in face recognition, training data could include image detections associated with the respective individual identifications. In another example, aggression detection training data could include video and audio samples associated with a binary "yes/no" ("aggression/no aggression") as ground truth.

In many real-life applications training sets are imbalanced. This is particularly true in data fusion/classification applications where the aim is to detect a rare event such as aggression, intrusion, car accidents, gunshots, etc. In such applications it is relatively easy to get training data for the imposter class (e.g. "no aggression", "no intrusion", "no car accident", "no gunshot") as opposed to training data for the genuine class ("aggression", "intrusion", "car accident", "gunshot").

In cases where training set imbalance exists, the learned classifier tends to be biased toward the more common (majority) class, thereby introducing missed detections and generally a suboptimal system performance. Bootstrap resampling for creating classifier ensembles is a well-known technique, but suffers from noisy examples and outliers which can have a negative effect on the derived classifiers, especially for weak learners when class imbalance is high and bootstrapping is done only on the minority class, which leads to only few examples after bootstrapping.

Thus, it would be desirable to have a method and system for handling imbalanced datasets for classification and data fusion applications that offers reduced noise and bias due to class imbalance. This goal is met by embodiments of the present invention.

**SUMMARY**

Various embodiments of the present invention provide sampling according to a combination of resampling and a supervised classification framework. Specifically, the adaptive bootstrap methodology is modified to resample according to known sampling techniques, such as a $k$-Nearest Neighbors ($k$-NN), and then to induce weak classifiers from the bootstrap samples. This is done iteratively and adapted according to the performance of the weak classifiers. Finally, a weighted combination scheme combines the weak classifiers into a strong classifier.

Embodiments of the present invention are advantageous in the domain of classification and data fusion, notably for classifier-based data fusion, which typically utilize regular classifiers (such as via Support Vector Machines) to perform data fusion (for example, classifier-based score level fusion for face recognition).

Embodiments of the invention improve the performance of supervised algorithms to address class imbalance issues in classification and data fusion frameworks. They provide bootstrapping aggregation that takes into account class imbalance in both the sampling and aggregation steps to iteratively improve the accuracy of every "weak" learner induced by the bootstrap samples.

The individual steps are detailed and illustrated herein.

Therefore, according to an embodiment of the present invention, there is provided a method for performing classification in an imbalanced dataset containing a plurality of majority class instances and a plurality of minority class instances, the method including: (a) training, by a data processor, a classifier on the imbalanced dataset; (b) estimating, by the data processor, an accuracy $ACC$ for the classifier; (c) sampling, by the data processor, the plurality of majority class instances; (d) iterating, by the data processor, a predetermined number of times, during an iteration of which the data processor performs: (e) sampling to obtain a sample containing a plurality of majority class instances so that the ratio of a number of minority class instances to a number of majority class instances in the sample equals a predetermined ratio by computation on a previous iteration; (f) training a weak classifier on the sample obtained during the iteration; and (g) computing a ratio of a number of minority class instances to a number of majority class instances for a subsequent iteration; and (h) combining, by the data processor, a plurality of weak classifiers from a plurality of iterations into an ensemble aggregation corresponding to a strong classifier, wherein the combining is according to respective weights based on a function of accuracies of the weak classifiers.

In addition, according to another embodiment of the present invention, there is provided a system for performing classification in an imbalanced dataset containing a plurality of majority class instances and a plurality of minority class instances, the system including: (a) a data processor; and (b) a non-transitory storage device connected to the data processor, for storing executable instruction code, which executable instructions, when executed by the data processor, cause the processor to perform: (c) training a classifier on the imbalanced dataset; (d) estimating an accuracy *ACC* for the classifier; (e) sampling the plurality of majority class instances; (f) iterating a predetermined number of times, during an iteration of which: (g) sampling to obtain a sample containing a plurality of majority class instances so that the ratio of a number of minority class instances to a number of majority class instances in the sample equals a predetermined ratio by computation on a previous iteration; (h) training a weak classifier on the sample obtained during the iteration; and (i) computing a ratio of a number of minority class instances to a number of majority class instances for a subsequent iteration; and (j) combining a plurality of weak classifiers from a plurality of iterations into an ensemble aggregation corresponding to a strong classifier, wherein the combining is according to respective weights based on a function of accuracies of the weak classifiers.

Moreover, according to a further embodiment of the present invention, there is provided a computer data product for performing classification in an imbalanced dataset containing a plurality of majority class instances and a plurality of minority class instances, the computer data product including non-transitory data storage containing executable instruction code, which executable instructions, when executed by a data processor, cause the processor to perform: (a) training a classifier on the imbalanced dataset; (b) estimating an accuracy *ACC* for the classifier; (c) sampling the plurality of majority class instances; (d) iterating a predetermined number of times, during an iteration of which: (e) sampling to obtain a sample containing a plurality of majority class instances so that the ratio of a number of minority class instances to a number of majority class instances in the sample equals a predetermined ratio by computation on a previous iteration; (f) training a weak classifier on the sample obtained during the iteration; and (g) computing a ratio of a number of minority class instances to a number of majority class instances for a subsequent iteration; and (h) combining a plurality of weak classifiers from a plurality of iterations into an ensemble aggregation corresponding to a strong classifier, wherein the combining is according to respective weights based on a function of accuracies of the weak classifiers.

## BRIEF DESCRIPTION OF THE DRAWINGS

The subject matter disclosed may best be understood by reference to the following detailed description when read with the accompanying drawings in which:

Fig. 1 illustrates one example of a sampling technique, a weighted *k* nearest neighbor sampling with replacement, as utilized by various embodiments of the present invention.
Fig. 2 illustrates the steps and data flow for generating an ensemble aggregation according to an embodiment of the present invention.

For simplicity and clarity of illustration, reference numerals may be repeated to indicate corresponding or analogous elements.

## DETAILED DESCRIPTION

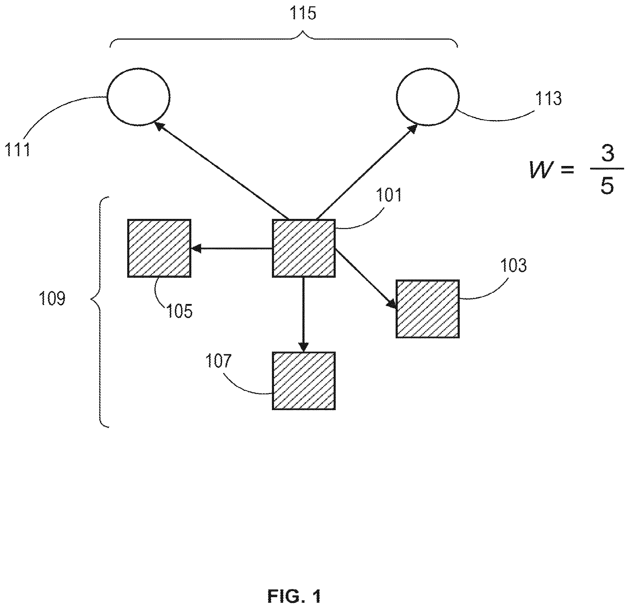

Fig. 1 illustrates a non-limiting example of a sampling technique, a weighted *k* nearest neighbor sampling with replacement, as utilized by various embodiments of the present invention. The weight is computed as the ratio of the number of sampled majority class instances to the total number of sampled nearest neighbors (i.e., *k*). In this non-limiting example, instances **101**, **103**, **105**, and **107** are instances of a majority class **109.** Instances **111** and **113** are instances of a minority class **115.** Taking *k* = 5, the *k* nearest neighbors of instance **101** are instances **103**, **105**, **107**, **111**, and **113**, 3 of which are of majority class **109** (instances **103**, **105**, and **107**). Hence, the weighted *k* nearest neighbor sampling for instance **101** is computed for this example as *w* = 3/5.

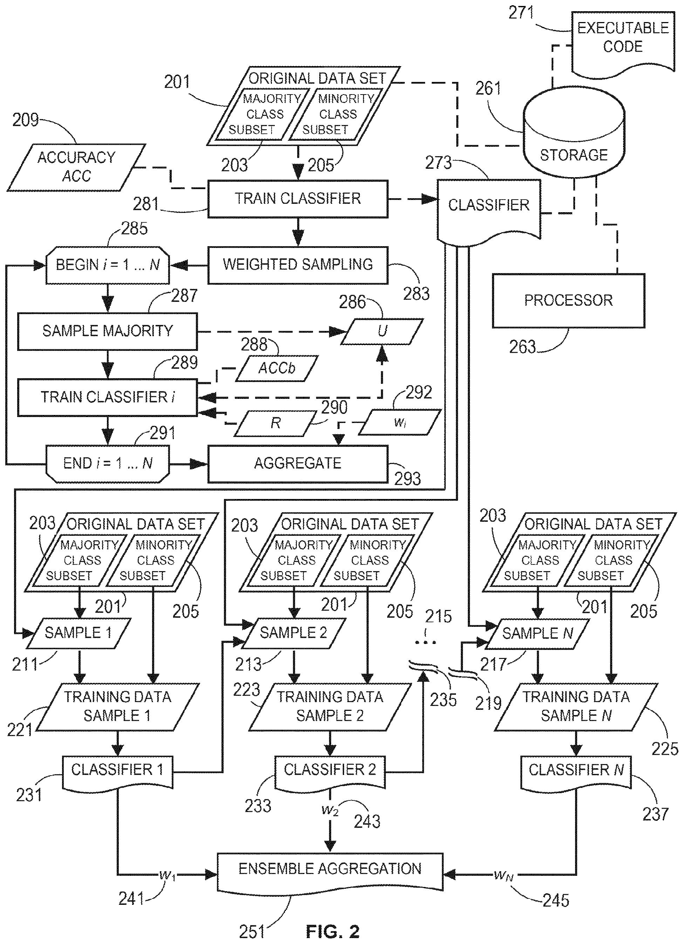

Fig. 2 illustrates steps and data flow for generating an ensemble aggregation **251** according to an embodiment of the present invention. In the following description of this embodiment, data processing operations are performed by a data processor **263** working from an original dataset **201** which is stored in a non-transitory data storage unit **261.** Original dataset **201** includes a majority class subset **203** and a minority class subset **205.** Also contained in non-transitory data storage unit **261** is machine-readable executable code **271** for data processor **263.** Executable code **271** includes instructions for execution by data processor **263** to perform the operations described herein.

A classifier **273** is typically an algorithm or mathematical function that implements classification, identifying to which of a set of categories (sub-populations) a new observation belongs. In this embodiment, classifier **273** is also contained in non-transitory data storage unit **261** for implementation by data processor **263.**

It is noted that data processor **263** is a logical device which may be implemented by one or more physical data processing devices. Likewise, non-transitory data storage unit **261** is also a virtual device which may be implemented by one or more physical data storage devices.

In a step **281** classifier **273** is trained on original dataset **201** and a classification accuracy *ACC* **209** is estimated for classifier **273.** Then, in a step **283**, weighted sampling with replacement is performed in majority class subset **203** in original dataset **201**, as described previously and illustrated in Fig. 1.

A loop starting at a beginning point **285** through an ending point **291** (loop **285 - 291**) is iterated for an index $i$ = 1 to $N$, where $N$ is predetermined and typically takes values from 10 to 100. However, $N$ can be determined in various ways, according to factors such as system performance, overall accuracy, and similar considerations. In a related embodiment of the present invention, $N$ is predetermined according to a constraint on an upper bound of the standard deviation of the geometric mean of the final result.

In a step **287** within loop **285 - 291** for index $i$, majority class subset **205** instances are sampled according to the weighted bootstrapping scheme using weights obtained in step **283**, so that the resulting ratio of the minority class instances to the majority class instances in the bootstrap sample equals a ratio $U$ **286** predetermined by computation on the previous iteration ($i$ - 1). For $i$ = 1, $U$ = 1 by default.

In a step **289** a weak classifier denoted by index $i$ is trained on the bootstrap sample obtained in step **287**. Classification accuracy $ACCb$ **288** of classifier $i$ is estimated (e.g., using cross-validation). In a related embodiment, ratio $U$ **286** of the number of minority class instances to majority class instances for the next iteration ($i$ + 1) is a function having the present iteration's value of $U$ **286** ($U_i$) as an argument, and is obtained by computation according to the following formula, where the level of constant class balance $U_{ref}$ is the ratio between the amount of samples in minority- and majority-class subsets:

$$U_{i+1} = c_A \cdot g(A_{(i)}) + c_U \cdot U_{(i)} + c_R \cdot R + U_{ref} \qquad \text{(Equation 1)}$$

where weighting coefficients $c_A$, $c_U$, and $c_R$ are non-negative numbers whose values depend on the significance of each term. The constant $U_{ref}$, that is the original level of class balance of the dataset is required to provide the left bound of the sampling level of class balance. Coefficients $c_A + c_U + c_R + U_{ref}$ = 1 are the weights that provide the upper sampling level of class balance that equals to one (meaning a completely balanced set). The easiest way is to define them to be equal $\frac{1 - U_{ref}}{3}$ . The function $g(\cdot)$ is the penalty function of the classifier performance measure $A_{(i)}$. It is established to force a rapid decrease of the sampling level of class balance $U_{(i+1)}$ when $A_{(k)}$ is low. This penalty function can be a power function $g = (A_{(k)})^n$, where n depends on the required decaying effect.

According to a related embodiment, $U$ can either be a constant or start from a large number and progressively shrink if the generated weak classifiers produce good results in both overall accuracy and G-mean.

Data structures resulting from the iterations of loop **285 - 291** are illustrated in Fig. 2 as follows:

For the first iteration of loop **285 - 291** ($i$ = 1), a bootstrap sample 1 **211** is obtained from majority class subset **203** by classifier **273**. A training data sample 1 **221** is obtained from sample 1 **211** and minority class subset **205**, and is used to train a classifier 1 **231**.

For the second iteration of loop **285 - 291** ($i$ = 2), a bootstrap sample 2 **213** is obtained from majority class subset **203** by classifier **273** and classifier 1 **231**. A training data sample 2 **223** is obtained from sample 2 **213** and minority class subset **205**, and is used to train a classifier 2 **233**. Classifier 2 **233** is used in the third iteration **235** ($i$ = 3, not shown in detail). Iterations not shown ($i$ = 3, 4, ..., $N$ - 1) are indicated by an ellipsis **215**.

For the final iteration of loop **285 - 291** ($i$ = $N$), a bootstrap sample $N$ **217** is obtained from majority class subset **203** by classifier **273** and a classifier $N$ - 1 **219** (not shown in detail). A training data sample $N$ **225** is obtained from a sample $N$ **217** and minority class subset **205**, and is used to train a classifier $N$ **237**.

After loop **285 - 291** completes, in a step **293** the weighted combining scheme is used to combine the $N$ weak classifiers obtained from steps **287** and **289** (as iterated in loop **285 - 291**) into ensemble aggregation **251** corresponding to a strong classifier. The contribution of each weak classifier is according to a weight computed as:

$$w_i = 2 \cdot \frac{acc_i^{(-)} \cdot acc_i^{(+)}}{acc_i^{(-)} + acc_i^{(+)}} \qquad \text{(Equation 2)}$$

where $acc_i^{(-)}$ and $acc_i^{(+)}$ are the class-specific majority ("negative") and minority ("positive") accuracies for each weak classifier determined on the validation set that was unseen before.

Equation 2 above is for a 2-class case - a "negative" class and a "positive" class. In general, where there are L classes, the following multiclass relationship holds:

$$\frac{1}{w_i} = \frac{1}{L}\left(\frac{1}{acc_i^{(1)}} + \frac{1}{acc_i^{(2)}} + \mathrm{K} + \frac{1}{acc_i^{(L)}}\right) \qquad \text{(Equation 3)}$$

where $acc_i^{(\lambda)}$ is the class-specific accuracy for the $\lambda^{th}$ class ($\lambda$ = 1, 2, ..., L). For the case $L$ = 2, $acc_i^{(-)} = acc_i^{(1)}$, and $acc_i^{(+)} = acc_i^{(2)}$, Equation 3 yields Equation 2.

In Fig. 2, there is a weight $w_1$ **241**, a weight $w_2$ **243**, and a weight $w_N$ **245**.

As noted previously, in a related embodiment of the present invention the above operations and computations are performed by a system having data processor **263** to perform the above-presented method by executing machine-readable executable code instructions **271** contained in a non-transitory data storage device **261**, which instructions, when executed by data processor **263**, cause data processor **263** to carry out the steps of the above-presented method.

In another related embodiment of the present invention, a computer product includes non-transitory data storage containing machine-readable executable code instructions **271**, which instructions, when executed by a data processor, cause the data processor to carry out the steps of the above-presented method.

**Claims**

1. A method for performing classification in an imbalanced dataset containing a plurality of majority class instances and a plurality of minority class instances, the method comprising:

   training, by a data processor, a classifier on the imbalanced dataset;
   estimating, by the data processor, an accuracy *ACC* for the classifier;
   sampling, by the data processor, the plurality of majority class instances;
   iterating, by the data processor, a predetermined number of times, during an iteration of which the data processor performs:

      sampling to obtain a sample containing a plurality of majority class instances so that the ratio of a number of minority class instances to a number of majority class instances in the sample equals a predetermined ratio by computation on a previous iteration;
      training a weak classifier on the sample obtained during the iteration; and
      computing a ratio of a number of minority class instances to a number of majority class instances for a subsequent iteration; and

   combining, by the data processor, a plurality of weak classifiers from a plurality of iterations into an ensemble aggregation corresponding to a strong classifier, wherein the combining is according to respective weights based on a function of accuracies of the weak classifiers.

2. The method of claim 1, wherein the sampling is done with replacement.

3. The method of claim 1 or 2, wherein the number of times for the iterating is predetermined according to a constraint on an upper bound of a standard deviation of a geometric mean of a final result of the iterating.

4. The method of any one of claims 1 to 3, wherein, for the first iteration, the ratio of the number of minority class instances to the number of majority class instances in the sample equals 1.

5. The method of any one of claims 1 to 4, wherein, for a subsequent iteration, the ratio of the number of minority class instances to the number of majority class instances is a function having the corresponding ratio of the present iteration as an argument.

6. The method of any one of claims 1 to 4, wherein, for a subsequent iteration, the ratio of the number of minority class instances to the number of majority class instances is a function having a random number as an argument.

7. The method of any one of claims 1 to 6, wherein, for a subsequent iteration, the ratio of the number of minority class instances to the number of majority class instances is a function having the accuracy *ACC* as an argument.

8. A system for performing classification in an imbalanced dataset containing a plurality of majority class instances and a plurality of minority class instances, the system comprising:

a data processor; and
a non-transitory storage device connected to the data processor, for storing executable instruction code, which executable instructions, when executed by the data processor, cause the processor to perform:

training a classifier on the imbalanced dataset;
estimating an accuracy *ACC* for the classifier;
sampling the plurality of majority class instances;
iterating a predetermined number of times, during an iteration of which:

sampling to obtain a sample containing a plurality of majority class instances so that the ratio of a number of minority class instances to a number of majority class instances in the sample equals a predetermined ratio by computation on a previous iteration;
training a weak classifier on the sample obtained during the iteration; and
computing a ratio of a number of minority class instances to a number of majority class instances for a subsequent iteration; and

combining a plurality of weak classifiers from a plurality of iterations into an ensemble aggregation corresponding to a strong classifier, wherein the combining is according to respective weights based on a function of accuracies of the weak classifiers.

9. A computer data product for performing classification in an imbalanced dataset containing a plurality of majority class instances and a plurality of minority class instances, the computer data product comprising non-transitory data storage containing executable instruction code, which executable instructions, when executed by a data processor, cause the processor to perform:

training a classifier on the imbalanced dataset;
estimating an accuracy *ACC* for the classifier;
sampling the plurality of majority class instances;
iterating a predetermined number of times, during an iteration of which:

sampling to obtain a sample containing a plurality of majority class instances so that the ratio of a number of minority class instances to a number of majority class instances in the sample equals a predetermined ratio by computation on a previous iteration;
training a weak classifier on the sample obtained during the iteration; and
computing a ratio of a number of minority class instances to a number of majority class instances for a subsequent iteration; and

combining a plurality of weak classifiers from a plurality of iterations into an ensemble aggregation corresponding to a strong classifier, wherein the combining is according to respective weights based on a function of accuracies of the weak classifiers.

$$W = \frac{3}{5}$$

**FIG. 1**

EP 3 355 244 A1

**FIG. 2**

**EP 3 355 244 A1**

Europäisches
Patentamt

European
Patent Office

Office européen
des brevets

# EUROPEAN SEARCH REPORT

Application Number

EP 18 15 2796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUKHANOV S ET AL: "Bootstrap-based SVM aggregation for class imbalance problems", 2015 23RD EUROPEAN SIGNAL PROCESSING CONFERENCE (EUSIPCO), EURASIP, 31 August 2015 (2015-08-31), pages 165-169, XP032836325, DOI: 10.1109/EUSIPCO.2015.7362366 [retrieved on 2015-12-22] * the whole document * | 1-9 | INV. G06K9/62 |
| A | US 2009/157571 A1 (SMITH JOHN R [US] ET AL) 18 June 2009 (2009-06-18) * figure 2 * * figure 3 * | 1-9 | |
| A | HAMAMOTO Y ET AL: "A BOOTSTRAP TECHNIQUE FOR NEAREST NEIGHBOR CLASSIFIER DESIGN", IEEE TRANSACTIONS ON PATTERN ANALYSIS AND MACHINE INTELLIGENCE, IEEE COMPUTER SOCIETY, USA, vol. 19, no. 1, 1 January 1997 (1997-01-01), pages 73-79, XP000682686, ISSN: 0162-8828, DOI: 10.1109/34.566814 * the whole document * | 1-9 | |
| A | YAP BEE WAH ET AL: "Handling imbalanced dataset using SVM and k-NN approach", AIP CONFERENCE PROCEEDINGS, vol. 1750, 1 January 2016 (2016-01-01), page 020023, XP055476381, NEW YORK, US ISSN: 0094-243X, DOI: 10.1063/1.4954536 * the whole document * | 1-9 | |

TECHNICAL FIELDS SEARCHED (IPC)

G06K

The present search report has been drawn up for all claims

| Place of search | Date of completion of the search | Examiner |
|---|---|---|
| The Hague | 18 May 2018 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 2796

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2018

| Patent document cited in search report | Publication date | Patent family member(s) | Publication date |
|---|---|---|---|
| US 2009157571 A1 | 18-06-2009 | NONE | |

For more details about this annex : see Official Journal of the European Patent Office, No. 12/82

EPO FORM P0459